(19) Europäisches Patentamt
European Patent Office
Office européen des brevets

(11) **EP 2 380 767 B1**

(12) **EUROPEAN PATENT SPECIFICATION**

(45) Date of publication and mention
of the grant of the patent:
**03.04.2019 Bulletin 2019/14**

(21) Application number: **11174818.2**

(22) Date of filing: **30.05.2008**

(51) Int Cl.:
*B60L 5/42* (2006.01)     *B60M 1/36* (2006.01)
*B60M 7/00* (2006.01)     *B60L 53/14* (2019.01)
*B60L 53/30* (2019.01)

(54) **Public transport system, electrical vehicle and recharging station for said system**

Öffentliches Transportsystem, Elektrofahrzeug und Ladestation für dieses System

Système de transport public, véhicule électrique et poste de recharge pour ledit système

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **31.05.2007 FR 0703882**

(43) Date of publication of application:
**26.10.2011 Bulletin 2011/43**

(62) Document number(s) of the earlier application(s) in
accordance with Art. 76 EPC:
**08157356.0 / 1 997 668**

(73) Proprietor: **IVECO FRANCE S.A.S.
69200 Vénissieux (FR)**

(72) Inventor: **Gendre, Guy Pierre
69003 LYON (FR)**

(74) Representative: **Franzolin, Luigi et al
Studio Torta S.p.A.
Via Viotti, 9
10121 Torino (IT)**

(56) References cited:
**WO-A-00/66388      DE-A1- 10 012 039
FR-A- 2 892 069      FR-A1- 2 336 272**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention relates to a public transport system, an electric vehicle and a recharging station for said system.

The applicant is familiar with public transport systems for example the system described in the European patent application EP0982178 A1 .

In said document, the body of the electric vehicle is permanently connected to earth potential by means of wheels and rails. In such conditions, if a catenary should accidentally touch the body of the electric vehicle, a leakage current develops and can be quickly detected by the sensor.

On the other hand, if the electric vehicle is equipped with tyres, as disclosed in document FR2336272 A1, it is presumed to be electrically insulated from the ground. In such conditions, the sensor cannot detect an accidental contact between the first or the second conductor and the body of the electric vehicle.

This invention therefore aims to rectify this disadvantage by proposing a public transport system in which an accidental contact between the first or second conductor and the body of the electric vehicle can be detected.

Such aims are achieved by a public transport system according to the appended set of claims.

In such system, if the first or second electrical conductor or the first or second collector shoe is accidentally placed in contact with the body of the electric vehicle, a leakage currently develops between said conductor or collector shoe and the ground, through the body and the third conductor or collector shoe. Said leakage current can therefore be detected by the sensor, and corrective measures can quickly be taken.

Moreover, the fact that a floating power supply is used, i.e. one that is electrically insulated from the ground, prevents untimely detections of leakage current. Indeed, stray currents run through the ground. These stray currents are currents that are thrown into the ground by a large number of electrical apparatuses. All of these stray currents which circulate in the ground have a negligible amperage. However, if the first or second conductor or the first or second collector shoe had been earthed, said stray currents could build up in the conductor or collector shoe and would have a amperage that is not negligible. This event would provoke untimely detections of leakage current. It is therefore clear that in the aforementioned system, this problem is avoided by isolating the first and second conductor and the first and second collector shoe from the ground. Moreover such configuration allows the costs of the infrastructure to be contained even further.

A further object of the invention is an electric vehicle configured to be employed in the public transport system of the present invention.

Such electric vehicle offers the following advantages:

the use of guide rails is a simple, robust device for correctly positioning the bipolar rail in relation to the collector shoes,

the use of guide rails with a height of more than 20 centimeters makes it possible to simply make up for variations in the height of the vehicle due to the adjustment of the height of the vehicle floor in relation to a platform or to the weight of the passengers on the vehicle,

the use of a bipolar rail with a length of between Lmin and Lmax makes it possible to fully recharge the accumulator of the electric vehicle without it having to stop at the point of the recharging station,

the use of a steering wheel and a lock system allows the electric vehicle to move freely between two stations and, particularly, to move around an obstacle on the roadway, and

the use of a power accumulator allows the overall dimensions of said accumulator to be reduced in comparison to accumulators such as a battery.

A further object of the invention is a recharging station configured to be employed in the public transport system of the present invention.

Such recharging station has the following advantages :

the use of a bipolar rail with a length of between Lmin and Lmax allows the accumulator of the electric vehicle to be fully recharged without said vehicle having to stop at the point of the recharging station.

the use of a bipolar rail formed by two blades separated by an isolator the thickness of which is less than 4 cm makes it possible to reduce the overall dimensions of the bipolar rail suspending the bipolar rail or the pair of collector shoes more than 3 metres above the road prevents passengers from accidentally touching said rail, which thus increases the safety of the station.

The use of a proximity sensor enables the safety of the recharging station to be increased by powering the bipolar rail or the pair of collector shoes only starting from the moment at which the vehicle approaches said station, and the use of an actuator able to retract the bipolar rail or the pair of collector shoes means that the roadway reserved for electric vehicles can be used for the passage of other vehicles which will be higher than the electric vehicles used.

The invention will be better understood in the light of the following description, given purely by way of non-limiting example and with reference to the annexed drawings, in which:

• figure 1 is a schematic illustration of a view from above of a section of a public transport system of an application related to the present invention which is disclosed in figure 6,

- figure 2 is a schematic perspective illustration of a vehicle and recharging system in operation in the system shown in figure 1 and it is the subject of a related application,
- figure 3 is a schematic view from above of a guide device for a bipolar rail in operation in the vehicle shown in figure 2,
- figure 4 is a schematic side-view cross-section of the guide device in figure 3,

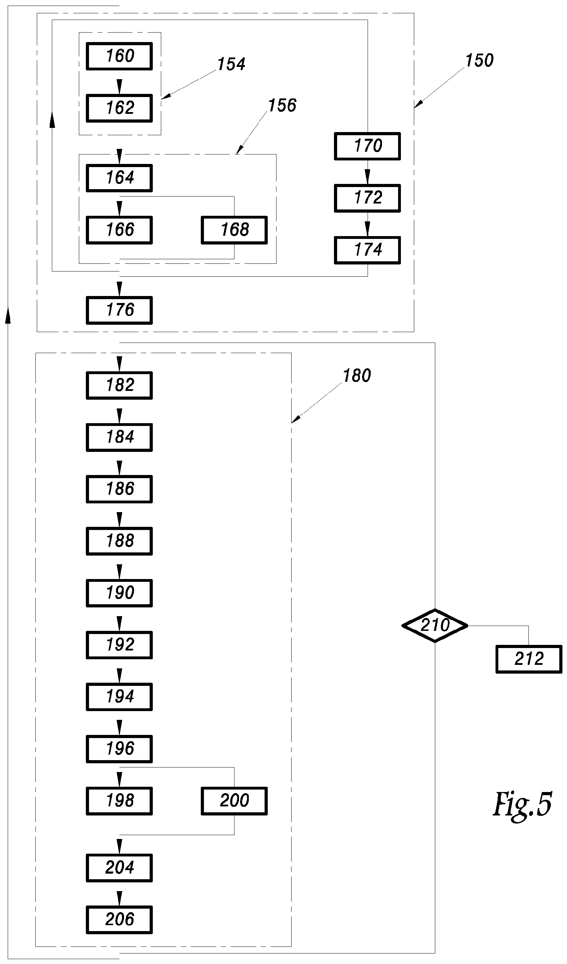

- figure 5 is a flow chart for the public passenger transport process in operation in the system shown in figure 1, and
- figure 6 is a schematic illustration of a vehicle and a recharging station according to the present invention.

In these drawings, the same reference numbers are used to indicate the same elements.

In the remainder of this description the characteristics and functions well known to those familiar with the prior art shall not be described in detail.

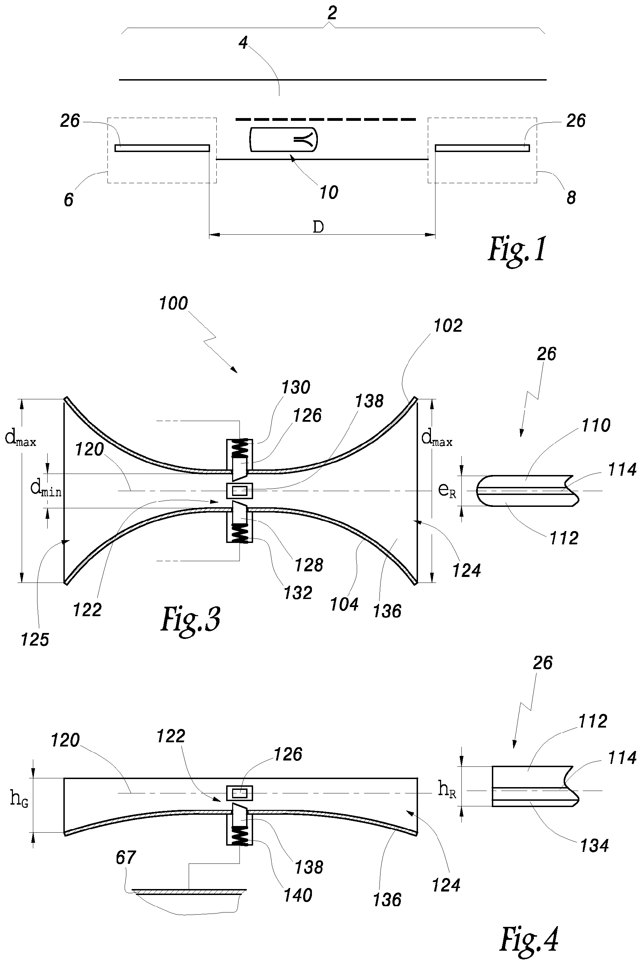

Figure 1 is a schematic illustration of a public passenger transport system 2. The system 2 is formed by a public transport route network, typically that of a town, and of several tens of electric public transport vehicles as well as several tens of recharging stations. Here, for example, the electric vehicles are buses. In order to simplify figure 1 , only one section 4 of the roadway forming this route network is shown. Also in order to simplify figure 1 , only two recharging 6 and 8 are shown, as well as only one public transport bus 10.

The roadway 4 is preferably an open-air road and not an underground one. For example, said roadway 4 is a road that can be used equally well by electric vehicles such as the bus 10 as by vehicles equipped with heat engines or others travelling on the same route network.

The bus 10 moves along a predetermined public transport line. Public transport line here means a pre-set route created within the route network of system 2 going from a point of departure to a point of arrival. Typically, said public transport line covers a route of several kilometers and, for example, more than 10 km. The recharging stations are distributed along each of the public transport lines. Each station is separated from the station immediately before or after it along said public transport line by a distance D. Distance D corresponds to the minimum distance that the bus 10 must cover to get from a previous station to the next station. Said distance D is at least 100 m. Preferably, said distance D is between 250 m and 600 m. Indeed, choosing a distance D that is too short results in a marked increase in the costs of the infrastructure. Conversely, a distance D greater than 600 m requires that an electrical energy accumulator capable of storing a large amount of electrical energy be installed in the bus 10, and one which therefore has large overall dimensions, thus reducing the maximum number of passengers that can be carried in the bus 10.

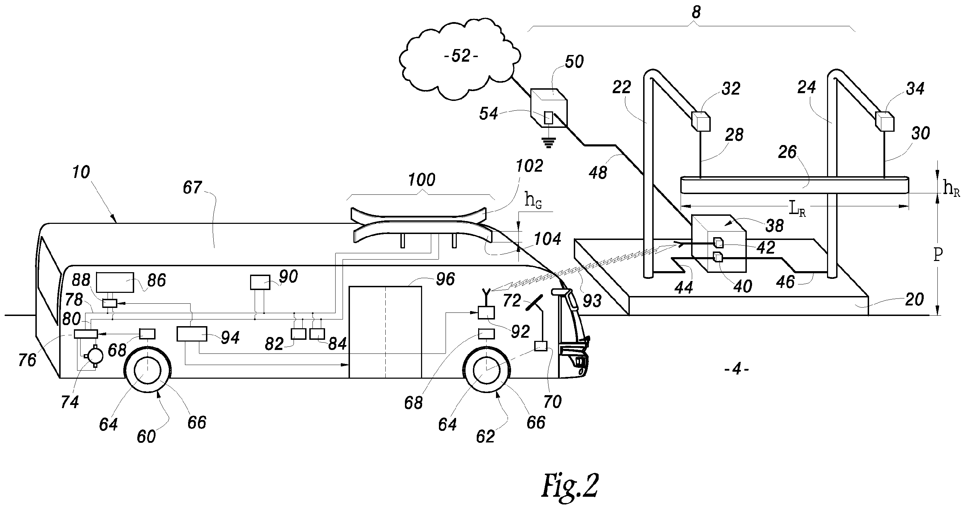

Figure 2 shows the station 8 and the bus 10 in greater detail.

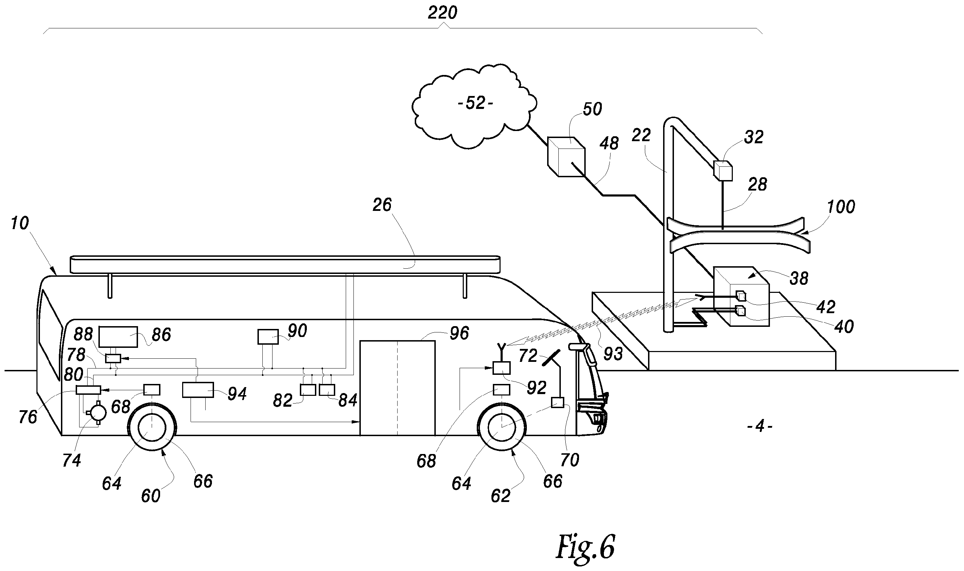

The embodiment of figure 2 is similar to the embodiment of figure 6, which is the subject of the invention. Figure 2 illustrates the operation of the system of figure 1.

The station 8 is installed alongside the roadway 4 on a raised platform 20.

Two hollow support columns 22 and 24 are fixed onto the platform 20. Said columns 22 and 24 hold up a bipolar rail 26 in the air in a horizontal position above the roadway 4, that is to say extending in parallel to a longitudinal axis of the roadway 4. The rail 26 is described in more detail in relation to figures 3 and 4 . The bipolar rail 26 is fixed to the columns 22 and 24 by means of attachment allowing sideways play, that is to say in a direction perpendicular to the longitudinal axis of the roadway, of at the most 1 metre and preferably at the most 50 cm. For example, each end of the rail 26 is fixed to a chain or cable, 28 and 30 respectively, of which the other end is mechanically connected to an actuator, respectively 32 and 34. The actuators 32 and 34 are fixed with no degree of freedom to the respective ends of columns 22 and 24.

The actuators 32 and 34 are able to move the rail 26 between an active position in which the rail 26 is at a height P above the roadway, and a retracted position in which the rail 26 is more further away from the roadway 4. Height P is at least greater than 3 m and, preferably, greater than 3 m 60 cm so that when the rail 26 is in its active position, it cannot be touched by a user of the system 2.

Here, in its retracted position, we can suppose that the rail 26 is at a height P' above the roadway which is greater than the height P so as to allow vehicles which are higher than 3.60 m to pass. The rail 26 itself has a height hR in the vertical direction, i.e. in a direction perpendicular to the surface of the roadway 4, of at least 15 cm. The length LR of the rail 26, meanwhile, is comprised between a length Lmin and a length Lmax. The length Lmin is defined by the following relationship:

$$Lmin = \left(\frac{Emax}{Pmax}\right) * Vmax$$

Wherein:

- Emax is the maximum energy that can be stored in a rechargeable accumulator installed on the vehicle, expressed in joules,
- Pmax is the greatest instantaneous power possible during the transfer of electrical energy between the rail 26 and the vehicle 10, expressed in Watts, and
- Vmax is the maximum speed allowed for the bus 10 when it is capturing electrical energy by mean of the rail 26, expressed in meters per second.

More specifically, the speed Vmax is the maximum speed allowed in order to fully recharge the accumulator of the bus 10 without the bus 10 stopping, starting from a state in which the accumulator is completely flat. This speed is set by the inventors of the system 2 so as to limit the length of the rail 26 and therefore limit the costs of the infrastructure. Here, the speed Vmax is chosen between 1 km/h and km/h. For example, in the system 2 the speed Vmax is equal to 10km/h.

As for the energy Emax, it is a function of the power of the bus 10 and the maximum distance D between two immediately consecutive stations in the system 2. Here, the energy Emax is chosen to be equal to or greater than the energy needed to allow the vehicle to move from any bipolar rail in the public transport system as far as the immediately consecutive bipolar rail without having to use sources of energy other than that stored in said accumulator.

For example, the energy Emax is assumed to be greater than or equal to the energy consumed by the electric vehicle when it covers the distance D on a roadway or horizontal urban highway using only the energy stored in the accumulator.

The power Pmax is imposed by the electrical equipment installed on the bus 10. Currently the value of Pmax is greater than 100 kW. This value could increase with technological evolutions. In the system 2, the length Lmin is equal to 15m.

The length Lmax is chosen to be less than 100 m. Here the length Lmax is chosen to be equal to 3Lminin order to contain the costs of the infrastructure. In this embodiment, the length LR has been chosen to be equal to Lmin.

Station 8 also includes a cabinet 38 inside which are stored electrical apparatus necessary for it to function. Particularly, said cabinet 38 includes a power supply 40 of continuous floating voltage for the rail 26, as well as a proximity sensor 42.

Here, the unit 40 is electrically connected to each of the ends of the rail 26 by means of conductive wires 44 and 46 running along the columns 22 and 24 and chains 28 and 30. The unit 40 is able to connect two of the blades forming the rail 26 respectively to two different voltages so as to establish a VDC continuous potential difference of between 100 Vdc and 400 Vdc. None of these voltages is equal to that of the ground, so that the Vdc potential difference is insulated from the ground. The unit 40 is also connected by means of a cable 48 to an electricity supply sub-station 50. The sub-station 50 is itself connected to a long-distance electricity distribution network 52. On the network 52, electrical energy is distributed in the form of three-phase voltage of more than 20 000 Vac. The sub-station 50 is able to convert the voltage of the network 52 into continuous floating voltage, that is to say insulated from the the ground, of between 420 and 1000 Vdc. The unit 40 is able to convert said continuous voltage of between 420 and 1000 Vdc into the potential difference of between 100 Vdc and 400 Vdc used to feed the rail 26.

The station 8 also comprises a sensor 54 able to detect a leakage current with a amperage that is greater than a limit S1. The leakage current is a current that leaks from the rail 26 towards the ground. Here, the detector 54 is housed inside the sub-station 50. The limit Slis lower than 100 mA. Here, the limit Slis chosen to be equal to 40 mA.

Due to the presence of the rubber tyres, the bus 10 is considered as being electrically insulated from the roadway 4 as it travels between the two stations 6 and 8.

The bus 10 also comprises:

- a body 67 in conductive material, such as metal for example,
- controllable suspension systems 68 that allow the floor of the bus 10 to be adjusted by 15 cm more or less depending on the height of the platform onto which passengers must alight,
- a steering system 70 for the drive wheels depending on the movement of a steering wheel 72 moved by the bus driver,
- an electric engine 74 able to drive the drive wheels 60 and function as an alternative generator of current when the vehicle 10 brakes,
- an inverter/rectifier 76 connected on one side to the engine 74 and on the other side to a DC bus formed by two electrical conductors 78 and 80,
- secondary charges 82 and 84 such as an air-conditioner, a heating unit, a lighting system or other units directly connected in parallel to the DC bus,
- an electrical energy accumulator 86 connected by means of a DC-DC converter 88 to the DC bus,
- a booster battery 90 that can be connected to the DC bus in order to supply electrical energy to the engine 74 starting from the moment at which the accumulator 86 is completely flat,
- a radio transmitter 92 able to communicate by means of a wireless connection 93 with the cabinet 38, and
- a control unit 94 for the inverter/rectifier 76 and the converter 88.

The unit 94 is also connected to the transmitter 92.

The accumulator 86 is a power accumulator, i.e. an accumulator able to supply instantaneous power of more than 50 kW and which has a limited storage capacity, i.e. less than 10 kWh. The capacity of the accumulator 86 is chosen to allow the bus 10 to move between any two consecutive stations of the public transport line without an external power supply, i.e. by consuming only the power stored in the accumulator 86. Thus, the capacity of the accumulator 86 also depends on the distance D between two successive stations.

Here, the accumulator 86 is able to supply instantaneous power of more than 200 kW and the capacity of the accumulator 86 is lower than 1 kWh.

The accumulator 86 is, for example, made of supercapacitors, that is to say capacitors which have a capacity greater than 1 F. The accumulator 86 may also be made up of flywheels, or hydraulic accumulators. The accumulator must be able to function for an entire day's use.

The power Pmax of instantaneous electrical energy transfer to the accumulator 86 is limited here by the converter 88. In this embodiment, the converter 88 has a maximum instantaneous power of energy transfer to the accumulator 86 of 200 kW.

The bus 10 also comprises access doors 96 to the vehicle, used to allow passengers on or off.

Lastly, the bus 10 is equipped with a guide device 100 for the rail 26 fixed on the roof of the bus 10. Said device 100 is, for example, formed by two vertical guide rails 102 and 104 opposite each other. Each guide rail has a height hG in the vertical direction of more than 20 cm to allow the rail 26 to engage with the guide rails 102, 104, no matter how high the floor of the bus is in relation to the roadway.

Figure 3 illustrates in greater detail the guide device 100 as well as one end of the rail 26.

The rail 26 comprises two vertical conductive blades 110 and 112 extending along the entire length of the rail 26. Said blades 110 and 112 are electrically insulated from each other by a vertical layer of insulator 114. Typically, said blades 110 and 112 are each between 1 to 3 cm thick and the insulator 114 is typically between 1 mm and 4 cm thick. The thickness eR of the rail 26 is thus less than 10 cm.

The guide rails 102 and 104 are each placed either side of a longitudinal axis 120 parallel to the direction of travel of the bus 10

The guide rails 102 and 104 are separated from each other by a distance dG measured perpendicularly to the axis 120 in a horizontal direction. Moving from the back towards the front of the vehicle 10, the distance dG initially gradually decreases from a maximum distance dmax to a minimum distance dmin. Then, the distance dG remains equal to the dmin for a length that is greater than or equal to, for example, one tenth of the length LR of the bipolar rail 26.

Typically, the distance dmin is chosen as strictly greater than the thickness eR and less than 1.2 times the thickness eR. This section of the device 100 in which the thickness is constant forms a corridor 122 through which the rail 26 is guided in a straight line.

Subsequently, as it approaches the front of the bus, the distance dG increases gradually up to a maximum distance of dmax. Typically, the distance dmax is chosen depending on the docking gap of the bus 10 in relation to the platform 20. Said docking gap is the minimum distance which separates the bus 10 from the platform 20, measured in a horizontal direction, when the bus 10 stops to let passengers off onto the platform 20. Typically, the docking gap is a maximum of 50 cm. In such conditions, here, the distance dmax is chosen to be less than or equal to 1 m and greater than or equal to 20 cm so as to allow a positioning error of the bus 10 in relation to the rail 26 of a maximum of more or less 50 cm.

The part of the device 100 situated towards the front of the bus 10 where the distance dG increases, forms a flared section 124, which serves to position the rail 26 opposite the entrance to the corridor 122.

The part of the device 100 situated towards the back of the bus 10, where the distance dG decreases, forms a flared section 125 which serves to limit the swaying of the rail 26 after the bus 10 has passed through the recharging station.

Collector shoes 126, 128 protrude through openings made respectively in guide rails 102 and 104 inside the corridor 122. Preferably, the collector shoes 126 and 128 face each other. Said collector shoes are not illustrated in detail here.

Here, each collector shoe is assembled so that it can move in a straight line in a horizontal direction perpendicular to axis 20.

Each of said collector shoes 126, 128 is drawn towards the inside of the corridor 122 by springs 130 and 132 respectively, so that each collector shoe remains in contact with its respective blade of the rail 26, despite any irregularities in the surface of said blades. Here, the thrust force exerted by each collector shoe 126, 128 on the rail 26 when the latter is placed in the corridor 122 is greater than 10 kg. In such conditions the collector shoes are preferably rotating collector shoes which are able to turn on the blades of the rail 26 in order to limit rubbing. A large thrust force improves the high-power electrical connection between the rail 26 and the collector shoes 126, 128, even at slow speeds.

The collector shoes 126 and 128 are electrically connected respectively to conductors 78 and 80 of the DC bus.

Figure 4 shows a vertical cross-section along axis 120 of the device 100, as well as a side view of the end of the rail 26.

The rail 26 also comprises in addition to vertical blades 110 and 112, a horizontal blade 134 which also extends along the entire length of the rail 26. Said blade 134 is electrically insulated from the two blades 110 and 112, for example, by the insulating layer 114. Blade 134 forms a lower horizontal surface facing the roadway 4.

Device 100 also comprises a third horizontal guide rail 136, placed between the two guide rails 102 and 104. Guide rail 136 is adapted so as to guide the rail 26 upwards in order to position rail 26 at a pre-set height in relation to the collector shoes 126 and 128. For example, for this purpose the two ends of the guide rail 136 are curved and turned towards the roof of the bus. Between these two ends, guide rail 136 has a flat section inside corridor 122. A third collector shoe 138 protrudes through an opening made in guide rail 136 inside corridor 122. Said collector shoe is also assembled so that it can move in a vertical direction perpendicular to axis 20. Collector shoe 138 is mechanically coupled to a spring 140 so that the collector shoe 138 stays in contact with blade 134 when the rail 26 slides into corridor 122. Said collector shoe 138 is electrically connected to the body 67 of the bus 10.

Blade 134 is earthed. Blade 134 is earthed, for example, by means of cables 28 and 30 and columns 22 and 24.

Guide rail 136 extends across the entire width available between guide rails 102 and 104.

Here it is supposed that all of the stations in system 2 are identical to station 8.

The functioning of system 2 shall now be described in relation to the process in figure 4 , in the specific case wherein bus 10 is travelling towards station 8.

The process thus begins with a phase 150 of travel between stations. During phase 150 the bus moves, for example, from station 6 towards station 8 on the roadway 4.

During phase 150 the bus 10 makes, alternately, a traction step 154 and a braking step 156.

During step 154, with an operation 160, the control unit 94 controls the converter 88 so that the electrical energy stored in accumulator 86 is delivered to the DC bus. Next, with an operation 162, secondary charges 82 and 84 as well as inverter/rectifier 76 and engine 754 consume the electrical energy supplied by accumulator 86. In operation 162, inverter/rectifier 76 functions as an inverter and engine 74 drives the drive wheels 60 so that the vehicle 10 moves forward.

At the beginning of the braking step 156, with an operation 166, the inverter/rectifier 76 is controlled so that it functions as rectifier, in an operation 164, and the motor functions as a three-phase voltage generator.

Next, the unit 94 controls the converter 88 so that it stores in accumulator 86 the electrical energy supplied by the inverter/rectifier 76 in the form of rectified voltage and current.

In parallel, in operation 168, the inverter/rectifier 76 also feeds the secondary charges 82 and 84.

In parallel to steps 154 and 156, in step 170, the sensor 42 senses that the vehicle 10 is approaching station 8, i.e. that it is less than 70 meters from the station. For example, sensor 42 detects the proximity of vehicle 10 when it receives a signal emitted constantly by vehicle 10 by means of the connection 93 with a power greater than a pre-set limit. Sensor 42 can also detect the proximity of vehicle 10 in response to receiving a command through connection 93 indicating that rail 26 is in place and that said rail is switched on.

In response, in step 172, cabinet 38 controls actuators 32 and 24 to move the rail 26 from its retracted position into its active position. Once rail 26 is in its active position, in step 174 the unit 40 switches rail 26 on. Once switched on, a potential difference of between 100 Vdc and 400 Vdc appears between blades 110 and 112.

In step 176, the phase of travel between stations is finished once the vehicle 10 enters station 8 at a speed that is less than or equal to Vmax.

A phase 180 of recharging then begins. At the beginning of phase 180, in step 182, the end of the rail 26 turned towards vehicle 10 enters the flared section 124 then slides onto one of the guide rails 102 or 104 and onto guide rail 136. Thus, in step 182, the end of rail 26 is guided as far as the entrance to corridor 122.

Next, as vehicle 10 continues to move ahead, in step 186 the collector shoes 126, 128 and 138 come to bear, respectively, on blades 110, 112 and 134. Thus, conductors 78 and 80 are now electrically connected to the rails 26 and the body of the bus 10 is simultaneously earthed.

Next, in step 188, while the doors 96 of the vehicle are not open, unit 94 controls converter 88 to recharge accumulator 86 using the electrical energy captured by collector shoes 126, 128. In step 190, as soon as the doors 96 open, unit 94 sends a command to the cabinet 38 to disconnect rail 26. In response, in step 192, unit 40 cuts off the power supply to rail 26. Next, passengers get off and on vehicle 10. Once the last passenger is on, the doors 96 close.

In response, in step 194, unit 94 sends cabinet 38 a command to switch on rail 26. Next, in step 196, the unit 40 once again switches on rail 26. Then, unit 94 controls converter 88 in order to continue to recharge accumulator 86, in step 198.

In parallel, in step 200, secondary charges 82 and 84, as well as inverter/rectifier 76 and engine 74 are fed using the electrical energy captured by collector shoes 126, 128. Specifically, in step 200, the electrical energy supplied by rail 26 is used to start the engine 74 so that the vehicle 10 starts moving without using the energy stored in accumulator 86

Vehicle 10 thus moves towards the outside of station 8 until rail 26 is fully disengaged from corridor 122. Next, rail 126 is guided by the flared section 125 towards its rest position so as to prevent the rail from swaying at all at the end of chains 28 and 30. 30.

When collector shoes 126, 128 are no longer in contact with rail 26, in step 204, unit 94 sends cabinet 38 a command to disconnect rail 26. In response, in step 206, unit 40 disconnects rail 26 then actuators 32 and 34 move rail 26 from its active position towards its retracted position. Phase 180 of recharging is completed and the process continues with a new phase of travel between stations. Phases 150 and 180 are thus repeated alternately from one station to the next along the public transport line.

In parallel to phase 180, in step 210, sensor 54 constantly compares the amperage of the leakage current with limit S1. As long as the amperage of the leakage current is lower than this limit, nothing takes place. Conversely, if the amperage of the leakage current exceeds limit S1, sensor 54 immediately proceeds to step 212 during which corrective measures are taken. For example, an alarm may be triggered and the power supply of rail 26 may be immediately interrupted.

It is therefore clear that if by accident, when bus 10 is at station 8, one of the blades 110 or 112 should come into contact with the body 67 of the bus, a leakage current develops through the body 67, blade 134 and the ground. This leakage current is then detected by sensor 54.

Figure 6 illustrates a public transport system 220, similar to the system of figure 2 , except that the positions of rail 126 and device 100 have been inverted. Figure 6 illustrates the current invention. More specifically, rail 26 is fixed to the roof of bus 10, whereas device 100 is suspended at the end of column 22. In this system 220, column 24, actuator 34 and chain 30 have been eliminated.

In system 220, blade 134 is electrically connected to the body 67 of bus 10 and the collector shoe 138 is earthed.

The functioning of system 220 follows on directly from that described in relation to figure 4 .

Numerous other embodiments are possible. For example, rail 26 could be fed by alternating current or voltage.

Note also that the stations do not necessarily correspond to the stops of vehicle 10. Thus, the public transport line could include several stations between two stops. Indeed, the system described herein allows accumulator 86 of vehicle 10 to be recharged without the vehicle having to stop. It is also possible for accumulator 86 to be recharged at a recharging station only if that is necessary for the bus 10 to be able to reach the next recharging station. Thus, the bus could skip one or more recharging stations.

Bus 10 could also comprise a motor-generator group able to generate electrical energy delivered to the electric engine 74 from a fuel such as petrol. Such a motor-generator group would be advantageously used in lieu and instead of battery 90 in order to compensate for any accidental stopping of bus 10 between two recharging stations.

Other embodiments of bipolar rail 26 are possible. For example, blades 110, 112 and 134 are replaced respectively by catenaries, and insulator 114 is formed by an air space sufficiently wide to ensure the insulation of the two catenaries. The length of each of said catenaries is between Lmin and Lmax. In this embodiment, collector shoes 126, 128 and 138 shall take the form of pantographs, each able to rub against a respective catenary of the bipolar rail.

It is not necessary for blade 138 or the third earthed electrical conductor to be joined to the bipolar rail. For example, as a variation, the third conductor is formed by an additional rail, mechanically independent from the bipolar rail.

Note also that a recharging station may be used alone for the sole purpose of recharging accumulator 86 of a vehicle as it moves at a speed Vmax without it being necessary for the vehicle to stop. In this case, it is not necessary for the station to be separated from another station by distance D. Conversely, the length of its bipolar rail must be comprised between Lmin and Lmax. For example, in this particular context, it is not necessary for the body of bus 10 to be earthed. The third electrical conductor 134 and the third collector shoe 138 as well as guide rail 136 can therefore be omitted.

It is not necessary for rail 26 to be moved from its active position to its retracted position after each vehicle 10 passes through. For example, rail 26 is permanently kept in its active position and only moved into its retracted position if necessary. In a further variation, rail 26 is permanently kept in its active position and actuators 32 and 34 are eliminated.

Device 100 can be moved off center to the right or left on the roof of vehicle 10.

**Claims**

1. Public transport system comprising:

 - at least one electric public transport vehicle (10) equipped with:

 - a body (67) in conductive material,
 - several wheels (60) supported by a roadway (4), each wheel being formed by a tyre (66) and a rim (64), so that the electric vehicle is considered as being electrically insulated from the road surface on which it travels,
 - several recharging stations placed one after the other along a public transport line, each station comprising:

 - at least first and second collector shoes (126,128)in order to supply electrical energy to electric vehicle (10) when the electric vehicle travels along said first and second collector shoes (126,128),
 - a power supply (40) for the first and second collector shoes (126,128)with first and second potentials,

 said system being **characterized by comprising:**

 a bipolar rail (26) fixed onto the roof of the vehicle in parallel to the direction of travel of said vehicle, said bipolar rail comprising a first and second electrical conductor (110,112) each having two ends between which they extend in parallel to the direction of travel, said first and second conductors being electrically insulated from each other by means of an insulator (114) capable of bearing a potential difference of at least 100 volts DC or AC between said two conductors, wherein the bipolar rail comprises a third electrical conductor (134) electrically insulated from the first and second electrical conductors, electrically connected to the body (67) of the electric vehicle, said conductor having two ends between which it extends in parallel to the direction of movement of the electric vehicle

wherein the first and second collector shoes (126,128) of each station has first and second potentials different from the earth potentials and a third collector shoe (138) which is earthed, said third collector shoe being suitable to rub against the third electrical conductor when the vehicle travels along the first and second collector shoes in order to connect the electric vehicle to earth potential at the same time as the first and second collector shoes rub against the first and second electrical conductors of said bipolar rail,

and wherein each station comprises a leakage current sensor suitable to detect the existence of a leakage current between the first or the second collector shoe and the ground if the amperage of the leakage current surpasses a pre-set limit.

2. System according to claim 1, wherein:

- the collector shoes of a station are separated from the collector shoes of the immediately consecutive station on the same line by a distance of at least 100 metres, and are electrically isolated from the collector shoes of any one of the other recharging stations, and
- said electric vehicle comprises at least one electric engine (74) suitable to drive in rotation one or more wheels of the vehicle, and an accumulator (86):
- electrically connected to the bipolar rail (26) so as to be recharged using the energy captured by the bipolar rail, when the vehicle is travelling along the first and second collector shoes, and
- electrically connected to the electric engine (74) to supply the engine with the electrical energy necessary to move the vehicle, when said vehicle is travelling between two consecutive stations, and
- capable of storing enough electrical energy to allow the vehicle to travel from any one of the stations on the line to the immediately consecutive bipolar rail, without having to resort to using other power sources than that stored in the accumulator.

3. Electric public transport vehicle according to claim 1 or 2, in which the electric vehicle is equipped with:

- a body (67) in a conductive material,
- several wheels (60) supported by a roadway (4), each wheel being formed by a tyre (66) and a rim (64), so that the electric vehicle is considered as being electrically insulated from the road surface on which it travels,

- said bipolar rail (26) fixed onto the roof of the vehicle in parallel to the direction of travel of said vehicle, said bipolar rail comprising a first and second electrical conductor (110,112) each having two ends between which they extend in parallel to the direction of travel, said first and second conductors being electrically insulated from each other by means of an insulator (114) capable of bearing a potential difference of at least 100 volts DC or AC between said conductors, and wherein the bipolar rail comprises a third electrical conductor (134) being electrically insulated from the first and second electrical conductors, which are electrically connected to the body (67) of the electric vehicle, said third electrical conductor having two ends between which it extends in parallel to the direction of movement of the electric vehicle.

4. Vehicle according to claim 3, wherein the length of each electrical conductor (110, 112) of the bipolar rail, measured between its two ends is comprised between Lmin and Lmax, where:
and Lmax = 100m, where:

- Emax is energy to be stored in the rechargeable accumulator expressed in joules, to allow the vehicle to travel from any one of the bipolar rails of the public transport system as far as the immediately consecutive bipolar rail without having to use energy sources other than that stored in said accumulator.
- Pmax is the greatest instantaneous power possible upon transferring electrical energy between the first and the second collector shoes and the electric vehicle, expressed in Watts, and
- Vmax is the maximum authorized speed of the vehicle when it is capturing electrical energy by means of the bipolar rail and the pair of collector shoes, expressed in meters per second, Vmax being greater than 1 km/h;

5. Vehicle according to claim 3 or 4, wherein said vehicle comprises:

- a steering wheel (72) that can be manually moved by a driver to freely direct the vehicle along the roadway, (4), and
- a steering system (70) for at least two of the vehicle's wheels according to the movement of the steering wheel.

6. Vehicle according to any one of claims 3 to 5, wherein the accumulator (86) is a power accumulator suitable to deliver instant power greater than 50 kW and having a maximum capacity for storing electrical energy of less than 10 kWh.

**7.** Recharging station according to claim 1 or 2, **characterized in that** the station comprises:

- at least a first and a second collector shoe (126,128) each able to rub, respectively, upon the first and second conductors of the bipolar rail of the vehicle, in order to deliver electrical energy to the electric (74) when said electric vehicle travels along said pair of collector shoes,
- a power supply (40) for the first and second collector shoes with first and second potentials different from the earth potential,
- a leakage current sensor suitable to detect the existence of a leakage current between the first or the second collector shoe and the ground if the amperage of the leakage current surpasses a pre-set limit,

in which the station comprises a third collector shoe (138) which is earthed, said third collector shoe being suitable to rub against the third electrical conductor when the vehicle travels along the first and second collector shoes in order to connect the body of the electric vehicle to earth potential at the same time as the first and second collector shoes rub against the first and second electrical conductors of said bipolar rail.

**8.** Station according to claim 7, wherein the station comprises a proximity sensor (42) for an electric vehicle suitable to indicate that an electric vehicle has left the station immediately previous to it and is moving towards said station and in which the power supply (40) of said station is able to release the power supply of the pair of collector shoes and, alternately, to stop the power supply of the pair of collector shoes according to the indication of the proximity sensor.

**9.** Station according to claim 7 or 8, wherein the station comprises an actuator (32,34) able to move the pair of collector shoes between an active position in which the collector shoe is able to come to bear upon each of the conductors of the bipolar rail and a retracted position in which it is possible for a vehicle higher than the electric vehicle to pass.

**Patentansprüche**

**1.** Öffentliches Transportsystem, umfassend:

- zumindest ein elektrisches öffentliches Transportfahrzeug (10), ausgestattet mit:

- einem Körper (67) aus leitendem Material,
- mehrere Räder (60), die von einer Straße (4) getragen werden, von denen jedes Rad durch einen Reifen (66) und eine Felge (64) gebildet wird, so dass das elektrische Fahrzeug als elektrisch isoliert von der Straßenoberfläche betrachtet werden kann, auf der es fährt,
- mehrere Ladestationen, die hintereinander entlang einer öffentlichen Transportlinie angeordnet sind, von denen jede Station umfasst:
- zumindest erste und zweite Kollektorschuhe (126,128) zur Zuführung elektrischer Energie zu dem elektrischen Fahrzeug (10), wenn das elektrische Fahrzeug entlang der ersten und zweiten Kollektorschuhe (126,128) fährt,
- eine Energieversorgung (40) für die ersten und zweiten Kollektorschuhe (126,128) mit ersten und zweiten Potenzialen,

welches System **dadurch gekennzeichnet ist, dass** es umfasst:

- eine biopolare Schiene (26), die auf dem Dach des Fahrzeugs parallel zur Fahrtrichtung des Fahrzeugs befestigt ist, welche bipolare Schiene einen ersten und einen zweiten elektrischen Leiter (110,112) umfasst, die jeweils zwei Enden aufweisen, zwischen denen sie sich parallel zu der Fahrtrichtung erstrecken, welche ersten und zweiten Leiter elektrisch voneinander durch einen Isolator (114) isoliert sind, der einer Potenzialdifferenz von zumindest 100 Volt Gleichspannung oder Wechselspannung zwischen den zwei Leitern standhalten kann,

wobei die bipolare Schiene einen dritten elektrischen Leiter (134) umfasst, der von den ersten und zweiten elektrischen Leitern elektrisch isoliert ist, von dem Körper (67) des elektrischen Fahrzeugs elektrisch isoliert ist, wobei der Leiter zwei Enden aufweist, zwischen denen er sich parallel zur Bewegungsrichtung des elektrischen Fahrzeugs erstreckt, wobei die ersten und zweiten Kollektorschuhe (126,128) jeder Station erste und zweite Potenziale aufweisen, die sich von den Massepotenzialen unterscheiden, und einen dritten Kollektorschuh (138), der geerdet ist, welcher dritte Kollektorschuh dazu geeignet ist, an dem dritten elektrischen Leiter zu reiben, wenn das Fahrzeug entlang der ersten und zweiten Kollektorschuhe fährt, um das elektrische Fahrzeug mit dem Massepotenzial zu verbinden, wenn gleichzeitig die ersten und zweiten Kollektorschuhe an den ersten und zweiten elektrischen Leitern der bipolaren Schiene reiben, wobei jede Station einen Leckstromsensor umfasst, geeignet zur Messung der Präsenz eines Leckstroms zwischen dem ersten oder dem zweiten Kollektorschuh und der Masse, falls die Stromstärke des Leckstroms eine vorbestimmte Grenze überschreitet.

2. System gemäß Anspruch 1, bei welchem

- die Kollektorschuhe einer Station von den Kollektorschuhen der unmittelbar nachfolgenden Station auf der gleichen Linie durch einen Abstand von zumindest 100 m getrennt sind und elektrisch von den Kollektorschuhen von jeder der anderen Ladestationen isoliert sind, und
- das elektrische Fahrzeug zumindest einen Elektromotor (74) umfasst, geeignet zum Antrieb von einem oder mehreren Rädern des Fahrzeugs zur Drehung, und einen Akkumulator (86), welcher
- elektrisch mit der bipolaren Schiene (26) verbunden ist, so dass er durch die Energie, die von der bipolaren Schiene aufgenommen wird, wieder aufgeladen wird, wenn das Fahrzeug sich entlang der ersten und zweiten Kollektorschuhe bewegt, und
- elektrisch mit dem Elektromotor (74) verbunden ist, zur Versorgung des Motors mit elektrischer Energie, die erforderlich ist, um das Fahrzeug zu bewegen, wenn das Fahrzeug sich zwischen zwei aufeinanderfolgenden Stationen bewegt, und
- in der Lage ist, genügend elektrische Energie zu speichern, um das Fahrzeug von einer beliebigen der Stationen auf der Linie zur unmittelbar nachfolgenden biopolaren Schiene zu fahren, ohne dass auf andere Energiequellen als den Akkumulator zurückgegriffen werden muss.

3. Elektrisches öffentliches Transportfahrzeug gemäß Anspruch 1 oder 2, in welchem das elektrische Fahrzeug ausgestattet ist mit:

- einem Körper (67) aus leitendem Material,

mehreren Rädern (60), die von einer Straße (4) getragen werden, von denen jedes Rad durch einen Reifen (66) und eine Felge (64) gebildet wird, so dass das elektrische Fahrzeug als elektrisch isoliert von der Straßenoberfläche betrachtet werden kann, auf der es fährt,

- wobei die bipolare Schiene (26) auf dem Dach des Fahrzeugs parallel zur der Fahrtrichtung des Fahrzeugs befestigt ist, welche bipolare Schiene einen ersten und einen zweiten elektrischen Leiter (110,112) umfasst, die jeweils zwei Enden umfassen, zwischen denen sie sich parallel zu der Fahrtrichtung erstrecken, wobei die ersten und zweiten Leiter elektrisch voneinander durch einen Isolator (114) isoliert sind, der einer Potenzialdifferenz von zumindest 100 Volt Gleichspannung oder Wechselspannung zwischen den Leitern standhalten kann, und wobei die bipolaren Schienen einen dritten elektrischen Leiter (134) umfassen, der elektrisch von den ersten und zweiten elektrischen Leitern isoliert ist, welche mit dem Körper (67) des elektrischen Fahrzeugs verbunden sind, wobei der dritte elektrische Leiter zwei Enden aufweist, zwischen denen er sich parallel zu der Fahrtrichtung des elektrischen Fahrzeugs erstreckt.

4. Fahrzeug gemäß Anspruch 3, bei welchem die Länge jedes elektrischen Leiters (110,112) der bipolaren Schiene, gemessen zwischen seinen beiden Enden, zwischen Lmin und Lmax liegt, wobei:

Lmin durch die folgende Beziehung definiert wird:

$$Lmin = \left(\frac{Emax}{Pmax}\right) * Vmax$$

und Lmax kleiner ist als 100 m,

- Emax die Energie ist, die in dem wiederaufladbaren Akkumulator zu speichern ist, ausgedrückt in Joule, um es dem Fahrzeug zu ermöglichen, von einer beliebigen der bipolaren Schienen des öffentlichen Transportsystems bis zur unmittelbar darauffolgenden bipolaren Schiene zu fahren, ohne dass auf andere Energiequellen als auf den Akkumulator zurückgegriffen werden muss,
- Pmax die größte momentane Leistung ist, die aufgrund der Übertragung elektrischer Energie zwischen den ersten und zweiten Kollektorschuhen und dem elektrischen Fahrzeug möglich ist, ausgedrückt in Watt, und
- Vmax die maximale zulässige Geschwindigkeit des Fahrzeugs ist, wenn diese elektrische Energie mittels der bipolaren Schiene und des Paars von Kollektorschuhen aufnimmt, ausgedrückt in m/sec, wobei Vmax größer ist als 1 km/h.

5. Fahrzeug gemäß Anspruch 3 oder 4, wobei das Fahrzeug umfasst:

- ein Steuerrad (72), welches von einem Fahrer manuell bewegt werden kann, um das Fahrzeug frei entlang der Straße (4) zu lenken, und
- ein Steuersystem (70) für zumindest zwei der Räder des Fahrzeugs entsprechend der Bewegung des Steuerrads.

**6.** Fahrzeug gemäß einem der Ansprüche 3 bis 5, bei welchem der Akkumulator (86) ein Leistungsakkumulator ist, geeignet zur Lieferung einer Momentanleistung, die größer ist als 50 kW, und mit einer maximalen Kapazität zur Speicherung elektrischer Energie kleiner als 10 kWh.

**7.** Ladestation für ein öffentliches Transportsystem gemäß Anspruch 1 oder 2, **dadurch gekennzeichnet, dass** die Station umfasst:

- zumindest einen ersten und einen zweiten Kollektorschuh (126,128), die jeweils an den ersten und zweiten Leitern der bipolaren Schiene des Fahrzeugs reiben können, um elektrische Energie zu dem Elektromotor (74) zu liefern, wenn das elektrische Fahrzeug entlang des Paars von Kollektorschuhen fährt,
- eine Leistungsversorgung (40) für die ersten und Kollektorschuhe mit ersten und zweiten Potenzialen, die sich von dem Massepotenzial unterscheiden,
- einen Leckstromsensor, geeignet zur Detektion der Präsenz eines Leckstroms zwischen dem ersten oder dem zweiten Kollektorschuh und der Masse, falls die Stromstärke des Leckstroms eine vorbestimmte Grenze überschreitet,
- wobei die Station einen dritten Kollektorschuh (138) umfasst, der geerdet ist, welcher dritte Kollektorschuh dazu geeignet ist, an dem dritten elektrischen Leiter zu reiben, wenn das Fahrzeug entlang der ersten und zweiten Kollektorschuhe fährt, um den Körper des elektrischen Fahrzeugs mit dem Massepotenzial zu verbinden, während die ersten und zweiten Kollektorschuhe an den ersten und zweiten elektrischen Leitern der bipolaren Schiene reiben.

**8.** Station gemäß Anspruch 7, bei welcher die Station einen Näherungssensor (42) für ein elektrisches Fahrzeug umfasst, geeignet zur Anzeige, dass ein elektrisches Fahrzeug die unmittelbar vorhergehende Station verlassen hat und sich zu der vorliegenden Station bewegt, wobei die Leistungsversorgung (40) der vorliegenden Station in der Lage ist, die Leistungsversorgung des Paars von Kollektorschuhen zu unterbrechen und alternierend die Leistungsversorgung des Paars von Kollektorschuhen gemäß der Anzeige des Näherungssensors anzuhalten.

**9.** Station gemäß Anspruch 7 oder 8, welche Station ein Betätigungsorgan (32,34) umfasst, welches das Paar von Kollektorschuhen zwischen einer aktiven Position, in welcher der Kollektorschuh sich an jeden der Leiter der bipolaren Schiene anlegen kann, und einer zurückgezogenen Position zu bewegen, in welcher ein Fahrzeug, welches höher ist als das elektrische Fahrzeug, passieren kann.

**Revendications**

**1.** Système de transport public comprenant :

- au moins un véhicule de transport public électrique (10) équipé :

- d'une carrosserie (67) en un matériau conducteur,
- de plusieurs roues (60) supportées par une chaussée (4), chaque roue étant formée par un pneu (66) et une jante (64), de sorte que le véhicule électrique est considéré comme étant isolé électriquement du revêtement routier sur lequel il se déplace,
- plusieurs stations de recharge placées les unes après les autres le long d'une ligne de transport public, chaque station comprenant :

- au moins des premiers et deuxièmes sabots de collecteur (126, 128) afin de fournir une énergie électrique au véhicule électrique (10) lorsque le véhicule électrique se déplace le long desdits premier et deuxième sabots de collecteur (126, 128),
- une alimentation (40) pour les premiers et deuxièmes sabots de collecteur (126, 128) avec des premiers et deuxièmes potentiels,

ledit système étant **caractérisé en ce qu'**il comprend :

un rail bipolaire (26) fixé sur le toit du véhicule parallèlement à la direction de déplacement dudit véhicule, ledit rail bipolaire comprenant des premiers et deuxièmes conducteurs électriques (110, 112) ayant chacun deux extrémités entre lesquelles ils s'étendent parallèlement à la direction de déplacement, lesdits premiers et deuxièmes conducteurs étant isolés électriquement l'un de l'autre au moyen d'un isolateur (114) capable de supporter une différence de potentiel d'au moins 100 volts continus ou alternatifs entre lesdits deux conducteurs, dans lequel le rail bipolaire comprend un troisième conducteur électrique (134) isolé électriquement des premiers et deuxièmes conducteurs électriques, connectés électriquement à la carrosserie (67) du véhicule électrique, ledit conducteur ayant deux extrémités entre lesquelles il s'étend parallèlement à la direction de déplacement du véhicule électrique, dans lequel les premiers et deuxièmes sabots de collecteur (126, 128) de chaque station ont des premiers et deuxièmes potentiels différents des potentiels de terre et un troisième sabot de collecteur (138) qui est mis à la terre, ledit troisième sabot de collecteur étant approprié pour frotter contre le troisième conducteur électrique lorsque le véhicule se déplace le long des premiers et deuxièmes sabots de collecteur afin de connecter le véhicule électrique au potentiel de terre en même temps que les premiers et deuxièmes sabots de collecteur frottent contre les premiers et deuxièmes conducteurs électriques dudit rail bipolaire,

et dans lequel chaque station comprend un capteur de courant de fuite approprié pour détecter l'existence d'un courant de fuite entre le premier ou le deuxième sabot de collecteur et la masse si l'ampérage du courant de fuite dépasse une limite prédéterminée.

2. Système selon la revendication 1, dans lequel :

- les sabots de collecteur d'une station sont séparés des sabots de collecteur de la station immédiatement suivante sur la même ligne d'une distance d'au moins 100 mètres, et sont isolés électriquement des sabots de collecteur de l'une quelconque des autres stations de recharge, et
- ledit véhicule électrique comprend au moins un moteur électrique (74) approprié pour entraîner en rotation une ou plusieurs roues du véhicule, et un accumulateur (86) :

- connecté électriquement au rail bipolaire (26) de manière à être rechargé en utilisant l'énergie capturée par le rail bipolaire, lorsque le véhicule se déplace le long des premiers et deuxièmes sabots de collecteur, et
- connecté électriquement au moteur électrique (74) pour alimenter le moteur avec l'énergie électrique nécessaire pour déplacer le véhicule, lorsque ledit véhicule se déplace entre deux stations consécutives, et
- capable de stocker suffisamment d'énergie électrique pour permettre au véhicule de se déplacer de l'une quelconque des stations sur la ligne jusqu'au rail bipolaire immédiatement suivant, sans avoir recours à l'utilisation de sources de puissance autres que celle stockée dans l'accumulateur.

3. Véhicule de transport public électrique selon la revendication 1 ou 2, dans lequel le véhicule électrique est équipé :

- d'une carrosserie (67) en un matériau conducteur,
- de plusieurs roues (60) supportées par une chaussée (4), chaque roue étant formée par un pneu (66) et une jante (64), de sorte que le véhicule électrique est considéré comme étant isolé électriquement du revêtement routier sur lequel il se déplace,
- ledit rail bipolaire (26) fixé sur le toit du véhicule parallèlement la direction de déplacement dudit véhicule, ledit rail bipolaire comprenant des premiers et deuxièmes conducteurs électriques (110, 112) ayant chacun deux extrémités entre lesquelles ils s'étendent parallèlement à la direction de déplacement, lesdits premiers et deuxièmes conducteurs étant isolés électriquement l'un de l'autre au moyen d'un isolateur (114) capable de supporter une différence de potentiel d'au moins 100 volts continus ou alternatifs entre lesdits conducteurs, et dans lequel le rail bipolaire comprend un troisième conducteur électrique (134) isolé électriquement des premiers et deuxièmes conducteurs électriques, qui sont connectés électriquement à la carrosserie (67) du véhicule électrique, ledit troisième conducteur électrique ayant deux extrémités entre lesquelles il s'étend parallèlement à la direction de déplacement du véhicule électrique.

4. Véhicule selon la revendication 3, dans lequel la longueur de chaque conducteur électrique (110, 112) du rail bipolaire, mesurée entre ses deux extrémités est comprise entre Lmin et Lmax, où :

- Lmin est définie par la relation suivante:

$$Lmin = \left(\frac{Emax}{Pmax}\right) * Vmax$$

et Lmax est inférieure à 100 m,
- Emax est l'énergie à stocker dans l'accumulateur rechargeable exprimée en Joules, pour permettre au véhicule de se déplacer de l'un quelconque des rails bipolaires du système de transport public jusqu'au rail bipolaire immédiatement suivant sans avoir à utiliser des sources d'énergie autres que celle stockée dans ledit accumulateur,
- Pmax est la puissance instantanée la plus grande possible lors du transfert de l'énergie électrique entre les premier et deuxième sabots de collecteur et le véhicule électrique, exprimée en watts, et
- Vmax est la vitesse autorisée maximum du véhicule lorsqu'il capture l'énergie électrique au moyen du rail bipolaire et de la paire de sabots de collecteur, exprimée en mètres par seconde, Vmax étant supérieur à 1 km/h.

5. Véhicule selon la revendication 3 ou 4, dans lequel ledit véhicule comprend :

- un volant (72) qui peut être déplacé manuellement par un conducteur pour diriger librement le véhicule le long de la chaussée, (4), et
- un système de direction (70) pour au moins deux des roues du véhicule conformément au déplacement du volant.

6. Véhicule selon l'une quelconque des revendications 3 à 5, dans lequel l'accumulateur (86) est un accumulateur de puissance approprié pour délivrer une puissance instantanée supérieure à 50 kW et ayant une capacité maximum de stockage d'énergie électrique inférieure à 10 kWh.

7. Station de recharge pour un véhicule de transport public selon la revendication 1 ou 2, **caractérisée en ce que** la station comprend :

   - au moins des premiers et deuxièmes sabots de collecteur (126, 128) capables chacun de frotter, respectivement, sur les premiers et deuxièmes conducteurs du rail bipolaire du véhicule, afin de délivrer l'énergie électrique au moteur électrique (74) lorsque ledit véhicule électrique se déplace le long de ladite paire de sabots de collecteur,
   - une alimentation (40) pour les premiers et deuxièmes sabots de collecteur avec des premiers et deuxièmes potentiels différents du potentiel de terre,
   - un capteur de courant de fuite approprié pour détecter l'existence d'un courant de fuite entre le premier ou le deuxième sabot de collecteur et la masse si l'ampérage du courant de fuite dépasse une limite prédéterminée,

   dans laquelle la station comprend un troisième sabot de collecteur (138) qui est mis à la terre, ledit troisième sabot de collecteur étant approprié pour frotter contre le troisième conducteur électrique lorsque le véhicule se déplace le long des premiers et deuxièmes sabots de collecteur afin de connecter la carrosserie du véhicule électrique au potentiel de terre en même temps que les premiers et deuxièmes sabots de collecteur frottent contre les premier et deuxième conducteurs électriques dudit rail bipolaire.

8. Station selon la revendication 7, dans laquelle la station comprend un capteur de proximité (42) pour un véhicule électrique approprié pour indiquer qu'un véhicule électrique a quitté la station immédiatement précédente et se déplace vers ladite station et dans laquelle l'alimentation (40) de ladite station est capable de libérer l'alimentation de la paire de sabots de collecteur et, alternativement, d'arrêter l'alimentation de la paire de sabots de collecteur conformément à l'indication du capteur de proximité.

9. Station selon la revendication 7 ou 8, dans laquelle la station comprend un actionneur (32, 34) capable de déplacer la paire de sabots de collecteur entre une position active dans laquelle le sabot de collecteur est capable de venir s'appuyer sur chacun des conducteurs du rail bipolaire et une position rétractée dans laquelle il est possible qu'un véhicule plus haut que le véhicule électrique passe.

*Fig.1*

*Fig.3*

*Fig.4*

**Fig.2**

*Fig.5*

*Fig.6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0982178 A1

- FR 2336272 A1